# EUROPÄISCHE PATENTSCHRIFT

(11) **EP 3 108 177 B1**
(45) Veröffentlichungstag und Bekanntmachung des Hinweises auf die Patenterteilung: **04.11.2020**
(21) Anmeldenummer: 15702289.8
(22) Anmeldetag: 04.02.2015
(51) Int. Cl.: F21S 41/16, F21S 41/176, F21S 45/70, F21Y 115/30, F21V 9/30

(54) **BELEUCHTUNGSVORRICHTUNG MIT PRIMÄRLICHTQUELLE UND LEUCHTSTOFFVOLUMEN**
LIGHTING DEVICE WITH PRIMARY LIGHT SOURCE AND PHOSPHOR VOLUME
DISPOSITIF D'ÉCLAIRAGE ÉQUIPÉ D'AU MOINS UNE SOURCE DE LUMIÈRE PRIMAIRE ET D'UN VOLUME DE SUBSTANCE FLUORESCENTE

(30) Priorität: 18.02.2014 DE 102014202943
(43) Veröffentlichungstag der Anmeldung: 28.12.2016
(73) Patentinhaber: OSRAM Beteiligungsverwaltung GmbH, 82031 Grünwald (DE)
(72) Erfinder: KÜNECKE, Jan-Erik, 93051 Regensburg (DE); FORSTER, Georg, 93049 Regensburg (DE)
(74) Vertreter: OSRAM GmbH - GC IP
(86) Internationale Anmeldenummer: PCT/EP2015/052286
(87) Internationale Veröffentlichungsnummer: WO 2015/124428

(56) Entgegenhaltungen:
- WO-A1-2013/096984
- WO-A1-2013/134807
- WO-A1-2014/072226
- JP-A- 2013 191 479
- US-A1- 2011 063 115
- US-A1- 2011 116 520

## Beschreibung

Die Erfindung betrifft eine Beleuchtungsvorrichtung, aufweisend mindestens eine Primärlichtquelle zum Erzeugen von Primärlicht, ein von der mindestens einen Primärlichtquelle beabstandetes Leuchtstoffvolumen zum zumindest teilweisen Umwandeln des Primärlichts in Sekundärlicht unterschiedlicher Wellenlänge, mindestens einen Lichtsensor zum Detektieren von mittels der mindestens einen Primärlichtquelle erzeugten Lichts und eine Auswerteeinrichtung zum Bestimmen eines Schadensfalls des Leuchtstoffvolumens auf der Grundlage von Sensordaten mindestens eines Lichtsensors. Die Erfindung betrifft auch ein Verfahren zum Bestimmen eines Schadensfalls eines Leuchtstoffvolumens einer Beleuchtungsvorrichtung. Die Erfindung ist insbesondere anwendbar auf den Bereich der Fahrzeugbeleuchtungen, insbesondere Außenbeleuchtung, z.B. zum Erzeugen eines Zusatzlichts, eines Tagfahrlichts usw. Die Erfindung ist insbesondere anwendbar auf Scheinwerfer, beispielsweise für Lastkraftwägen, Personenkraftwägen oder Motorräder.

Es sind Beleuchtungsvorrichtungen bekannt, zum Beispiel in den Patentveröffentlichungen US2011/116520 A1 und WO2014/072226 A1, wobei letzteres Dokument unter Art. 54 (3) EPÜ fällt, bei dem Primärlicht mittels eines Leuchtstoffs teilweise in Sekundärlicht größerer Wellenlänge umgewandelt wird. Der Leuchtstoff ist dabei von der Primärlichtquelle entfernt angeordnet, was auch als "Remote Phosphor" bezeichnet wird. Der Leuchtstoff strahlt dann ein Mischlicht mit einem Anteil aus nicht umgewandeltem oder konvertiertem Primärlicht und einem Anteil aus dem Sekundärlicht als Nutzlicht ab. Bei blauem Primärlicht, blau-gelb-konvertierendem Leuchtstoff und folglich gelbem Sekundärlicht mag ein blau-gelbes bzw. weißes Mischlicht erzeugt werden. Ist das Leuchtstoffvolumen geschädigt (z.B. durch ein Auftreten von Rissen und/oder Löchern in dem Leuchtstoffvolumen) kann es zu einer unerwünschten starken Durchstrahlung des Leuchtstoffvolumens durch das Primärlicht kommen. Dann mag die Beleuchtungsvorrichtung Primärlicht mit einer hohen Intensität abstrahlen, was unerwünschte Beleuchtungseffekte bewirkt oder sogar Gesundheitsschäden hervorrufen kann, z.B. Augenschäden bei direkter Betrachtung der Beleuchtungsvorrichtung. Dieser Nachteil ist besonders ausgeprägt bei einer Verwendung eines Lasers als Primärlichtquelle.

Es ist bekannt, einen Lichtsensor einzusetzen, um eine Intensität des mittels der Primärlichtquelle erzeugten Mischlichts zu detektieren und dadurch auf der Grundlage von Sensordaten dieses Lichtsensors mittels einer Auswerteeinrichtung einen Schadensfall des Leuchtstoffvolumens zu bestimmen. Dabei ist es nachteilig, bei einem Schadensfall innerhalb des Zeitraums, der vergeht, bis der Schadensfall erkannt worden ist, die intensive Primärstrahlung aus der Beleuchtungsvorrichtung austreten kann.

Es ist die **Aufgabe** der vorliegenden Erfindung, die Nachteile des Standes der Technik zumindest teilweise zu überwinden und insbesondere eine verbesserte Sicherheit gegenüber einem Austritt von intensiverer Primärstrahlung bei einem Schadensfall des Leuchtstoffvolumens zu ermöglichen, insbesondere eine verbesserte Augensicherheit.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch eine Beleuchtungsvorrichtung, aufweisend mindestens eine Primärlichtquelle zum Erzeugen von Primärlicht, ein von der mindestens einen Primärlichtquelle beabstandetes Leuchtstoffvolumen zum zumindest teilweisen Umwandeln des Primärlichts in Sekundärlicht unterschiedlicher Wellenlänge, mindestens einen Lichtsensor zum Detektieren von mittels der mindestens einen Primärlichtquelle erzeugten Lichts und eine Auswerteeinrichtung zum Bestimmen eines Schadensfalls des Leuchtstoffvolumens auf der Grundlage von Sensordaten mindestens eines Lichtsensors, wobei die Beleuchtungsvorrichtung mindestens eine Test- oder Zusatzlichtquelle zum Bestrahlen des Leuchtstoffvolumens aufweist und dazu eingerichtet ist, die mindestens eine Zusatzlichtquelle, den mindestens einen Lichtsensor und die Auswerteeinrichtung bei ausgeschalteter Primärlichtquelle zu betreiben.

Dadurch wird der Vorteil erreicht, dass eine mechanische Beschädigung des Leuchtstoffvolumens durch Löcher und/oder Risse erkannt werden kann, bevor die Beleuchtungsvorrichtung unter Aktivierung der Primärlichtquelle(n) in einen normalen Betriebsmodus übergeht. In anderen Worten kann der Aktivierung der Primärlichtquelle(n) eine Testphase vorgeschaltet werden, bei der Primärlichtstrahlung nicht oder nicht in schädlichem Maße austritt. Ergibt die Testphase, dass eine Schädigung des Leuchtstoffvolumens vorliegt, mag eine Warnung ausgegeben werden oder sogar ein normaler Betrieb unterbunden werden.

Die mindestens eine Primärlichtquelle mag beispielsweise mindestens eine Leuchtdiode (LED) und/oder mindestens einen Laser aufweisen. Die mindestens eine Primärlichtquelle mag insbesondere mindestens eine Halbleiterlichtquelle aufweisen, wobei ein Laser beispielsweise als eine Laserdiode ausgebildet sein kann.

Das Primärlicht mag z.B. UV-Licht oder blaues Licht sein, welche eine geringe Wellenlänge aufweisen und somit zur Aktivierung einer besonders großen Zahl von Leuchtstoffen geeignet sind.

Das Leuchtstoffvolumen mag ein oder mehrere Leuchtstoffe aufweisen. Zumindest einer der Leuchtstoffe (ggf. der einzige Leuchtstoff) wandelt das Primärlicht in Sekundärlicht um, z.B. blaues Primärlicht in gelbes Sekundärlicht. Bei Vorliegen mehrerer Leuchtstoffe mag mindestens einer der Leuchtstoffe zuvor umgewandeltes Sekundärlicht weiter in Sekundärlicht einer noch größeren Wellenlänge (auch als "Tertiarlicht" bezeichnet) umwandeln. Beispielsweise mögen bei UV-Licht als dem Primärlicht zwei Leuchtstoffe das UV-Licht in blaues bzw. grünes Sekundärlicht umwandeln und ein dritter Leuchtstoff einen Teil des grünen Sekundärlichts in rotes Sekundärlicht umwandeln.

Das Leuchtstoffvolumen mag in einem Durchlichtaufbau oder transmittierenden Aufbau verwendet werden, bei dem wellenlängenumgewandeltes Licht und ggf. durch das Leuchtstoffvolumen hindurchgelaufenes Primärlicht an einer Seite (der "Nutzlichtseite") des Leuchtstoffvolumens als Nutzlicht abgreifbar ist, welche einer Seite, auf welche das Primärlicht einstrahlt, abgewandt ist. Das Leuchtstoffvolumen mag auch in einem reflektierenden Aufbau verwendet werden, bei dem wellenlängenumgewandeltes Sekundärlicht und ggf. nicht umgewandeltes Primärlicht an einer Seite (der Nutzlichtseite) der Konversionseinrichtung abgreifbar ist, auf welche auch das Primärlicht einstrahlbar ist.

Unter der Nutzlichtseite des Leuchtstoffvolumens kann also insbesondere diejenige Seite des Leuchtstoffvolumens verstanden werden, von welcher aus das weiterverwendete Nutzlicht abgestrahlt wird.

Das Leuchtstoffvolumen mag insbesondere als eine Schicht vorliegen, also eine Höhe aufweisen, welche signifikant geringer ist als eine Ausdehnung in einer dazu senkrechten Ebene. Das Leuchtstoffvolumen mag beispielsweise als ein Plättchen oder als eine Scheibe vorliegen.

Das Leuchtstoffvolumen mag auf einem Träger aufgebracht sein. Der Träger mag für den Fall eines Durchlichtaufbaus (transmittierenden Aufbaus) aus lichtdurchlässigem Material bestehen, insbesondere aus transparentem Material. Der Träger mag z.B. ein Saphirplättchen sein. Der Träger mag für den Fall eines reflektierenden Aufbaus eine dem Leuchtstoffvolumen zugewandte diffus oder spekular reflektierende Oberfläche aufweisen. Er mag dann z.B. für eine effektive Kühlung aus Metall bestehen.

Das Umwandeln des Primärlichts in Sekundärlicht mag nur teilweise geschehen, z.B. falls der nicht umgewandelte Teil des Primärlichts als ein Nutzlichtanteil verwendet werden soll, z.B. als blauer Lichtanteil in einem blau-gelben Mischlicht. Das Umwandeln des Primärlichts in Sekundärlicht mag aber auch vollständig sein, z.B. falls das Primärlicht UV-Licht ist.

Der mindestens eine Lichtsensor mag insbesondere mindestens einen Helligkeitssensor umfassen. Dieser mag insbesondere in der Lage sein, ein Maß einer Helligkeit des auf ihn einfallenden Lichts zu erfassen und als Sensordaten auszugeben. Mindestens ein Lichtsensor mag zudem spektral empfindlich sein, d.h., dass er nur für Licht eines vorbestimmten spektralen Bereichs empfindlich ist, z.B. nur für das Primärlicht oder nur für ein Sekundärlicht.

Das mittels der mindestens einen Primärlichtquelle erzeugte Licht mag das direkt von der mindestens einen Primärlichtquelle erzeugte Primärlicht und/oder das indirekt davon mittels des Leuchtstoffvolumens erzeugte mindestens eine Sekundärlicht umfassen. Der mindestens eine Lichtsensor mag also insbesondere für das Primärlicht und/oder für mindestens ein Sekundärlicht und/oder für mindestens ein Tertiarlicht empfindlich sein.

Die Auswerteeinrichtung mag z.B. eine Logik oder Elektronik sein, welche mit dem mindestens einen Lichtsensor gekoppelt ist und so dessen bzw. deren Sensordaten empfängt.

Der mindestens eine Lichtsensor mag ein speziell zum Testen des Leuchtstoffvolumens vorgesehener Lichtsensor sein. Es ist für eine Kostenersparnis vorteilhaft, wenn der mindestens eine Lichtsensor auch bei aktivierter Primärlichtquelle bzw. bei normalem Betrieb genutzt wird, z.B. zur Steuerung oder Regelung eines Lichtstroms und/oder zur Schadensfeststellung bei normalem Betrieb. Die Beleuchtungsvorrichtung kann also auch dazu eingerichtet sein, einen Schadensfall im normalen Betrieb zu erkennen. Die Schadenerkennung in der Testphase und im normalen Betrieb mag dabei auf unterschiedlichen oder gleichen Methoden beruhen.

Die mindestens eine Zusatzlichtquelle ist eine von der mindestens einen Primärlichtquelle verschiedene Lichtquelle. Dies ermöglicht eine andere Anordnung, insbesondere Strahlrichtung, eine vereinfachte Ansteuerung sowie eine flexible Ausgestaltung der Zusatzlichtquelle. Durch Nutzung der mindestens einen Zusatzlichtquelle, des mindestens einen Lichtsensors und der Auswerteeinrichtung lässt sich die Testphase auch bei ausgeschalteter Primärlichtquelle durchführen.

Es ist eine Weiterbildung, dass die mindestens eine Zusatzlichtquelle Licht mit einer geringeren Intensität ausstrahlt als die mindestens eine Primärlichtquelle. Dadurch kann selbst für den Fall, dass eine mechanische Beschädigung des Leuchtstoffvolumens vorliegt, die Intensität unterhalb einer schädigenden Schwelle gehalten werden. Dazu mag eine geringere Zahl von Zusatzlichtquellen als von Primärlichtquellen verwendet werden. Alternativ oder zusätzlich strahlt mindestens eine Zusatzlichtquelle Licht mit einer geringeren Intensität aus als mindestens eine Primärlichtquelle.

Erfindungsgemäß ist die mindestens eine Zusatzlichtquelle dazu eingerichtet, ihr Licht auf eine Nutzlichtseite des Leuchtstoffvolumens zu strahlen. Folglich wird ihr Licht zumindest bei einem Durchlichtaufbau in eine Richtung auf das Leuchtstoffvolumen einstrahlen, welches zu einer Richtung des von dem Leuchtstoffvolumen im normalen Betrieb abgestrahlten Lichts entgegengesetzt ist. Diese Ausgestaltung weist den Vorteil auf, dass dabei in der Testphase praktisch kein Licht in schädigender Intensität aus der Beleuchtungsvorrichtung austritt.

Die Zusatzlichtquelle mag ein Laser sein. Die Zusatzlichtquelle mag eine Halbleiterlichtquelle sein, z.B. eine LED, eine OLED, oder eine Laserdiode. Die Zusatzlichtquelle ist jedoch nicht darauf beschränkt. Eine Zusatzlichtquelle mag von ihrer Art einer Primärlichtquelle entsprechen oder mag zu einer Primärlichtquelle unterschiedlich ausgebildet sein. Die Zusatzlichtquelle ist jedoch nicht auf Halbleiterlichtquellen beschränkt und mag z.B. auch eine Halogenglühlampe, eine Lichtquelle mit dielektrisch behinderter Entladung, eine Infrarotlichtquelle, ein Elektronenstrahlquelle, eine Mikrowellenquelle (Resonator) usw. sein.

Es ist noch eine Ausgestaltung, dass mindestens ein Lichtsensor dazu eingerichtet und angeordnet ist, von dem Leuchtstoffvolumen abgestrahltes Licht zu detektieren. Dabei kann beispielsweise ausgenutzt werden, dass ein Lichtabstrahlmuster eines mit Rissen und/oder Löchern versehenen Leuchtstoffvolumens sich von einem Lichtabstrahlmuster eines unbeschädigten Leuchtstoffvolumens unterscheidet, da Risse und Löcher das Reflexionsverhalten des Lichts (des Primärlichts und/oder des mindestens einen Sekundärlichts) verändern, insbesondere eine Abhängigkeit oder verstärkte Abhängigkeit der Intensität von einem Raumwinkel (Richtungsabhängigkeit) bewirken. Folglich lässt sich ein Vorhandensein von Rissen und/oder Löchern durch eine Änderung einer an einem Lichtsensor empfangenen Lichtintensität feststellen, wobei der Lichtsensor insbesondere in einen vorbestimmten Raumwinkel abgestrahltes Licht detektiert.

Es ist eine weitere Ausgestaltung, dass mehrere Lichtsensoren in Umfangsrichtung um das Leuchtstoffvolumen herum angeordnet sind, insbesondere gleichbeabstandet. Dadurch lässt sich die raumwinkel- oder richtungsabhängige Änderung des Lichtabstrahlmusters besonders zuverlässig feststellen. So mag sich durch eine gemeinsame oder korrelierte Betrachtung von Sensordaten mehrerer Lichtsensoren die Intensitätsänderung leichter feststellen lassen. Auch mag die Intensitätsänderung leichter festzustellen sein, falls sich diese nur in einem begrenzten Raumwinkelbereich deutlich feststellen lässt. Diese Ausgestaltung schließt ein, dass die Lichtsensoren selbst in Umfangsrichtung um das Leuchtstoffvolumen herum angeordnet sind oder dass Abzapfungseinrichtungen (z.B. Strahlteiler, Umlenkspiegel, Lichteintrittsflächen eines Lichtleiters usw.) dergestalt angeordnet sind. Die Abzapfungseinrichtungen leiten zumindest einen Teil des auf sie einfallenden Lichts an zumindest einen zugehörigen Lichtsensor, wobei die Lichtsensoren dann nicht in Umfangsrichtung um das Leuchtstoffvolumen herum angeordnet zu sein brauchen. So wird eine mögliche Anordnungsvielfalt erhöht.

Es ist eine Weiterbildung, dass mehrere Lichtsensoren in Umfangsrichtung um das Leuchtstoffvolumen herum angeordnet sind, welche auf unterschiedliche spektrale Bereiche, insbesondere Wellenlängen, empfindlich sind. Beispielsweise können mehrere unterschiedliche Lichtsensoren, die auf das Primärlicht bzw. auf ein Sekundärlicht empfindlich reagieren, gruppenweise (z.B. paarweise) in Umfangsrichtung um das Leuchtstoffvolumen herum angeordnet sein. Dies erhöht eine Erkennung oder Nachweisbarkeit von Löchern und Rissen weiter, beispielsweise durch eine Auswertung einer Korrelation einer Intensität und/oder einer Intensitätsänderung spektral unterschiedlicher Lichtanteile in einem gemeinsamen Raumwinkelbereich. Beispielsweise können dazu Intensitätsverhältnisse von Primärlicht zu Sekundärlicht für einen oder mehrere Raumwinkelbereiche ausgewertet bzw. bestimmt werden.

Der mindestens eine Lichtsensor kann tangential oder in einer Ebene neben dem insbesondere schichtartigen Leuchtstoffvolumen angeordnet sein. Er mag alternativ oder zusätzlich schräg zu einer Ebene des insbesondere schichtartigen Leuchtstoffvolumens angeordnet sein.

Es ist noch eine weitere Ausgestaltung, dass mindestens ein Lichtsensor dazu eingerichtet und angeordnet ist, Licht in einem Lichtpfad zwischen der mindestens einen Primärlichtquelle und dem Leuchtstoffvolumen zu detektieren. Ein solcher Lichtpfad entspricht im normalen Betrieb dem Lichtpfad des Primärlichts, das zu dem Leuchtstoffvolumen geführt wird. Bei dieser Ausgestaltung wird ausgenutzt, dass dann, wenn das Leuchtstoffvolumen z.B. Löcher aufweist, auf die Nutzseite des Leuchtstoffvolumens eingestrahltes Licht der mindestens einen Zusatzlichtquelle in stärkerem Maße durch das Leuchtstoffvolumen dringen kann als ohne diese Beschädigungen. Bei ausgeschalteter Primärlichtquelle bedeutet dies, dass bei beschädigtem Leuchtstoffvolumen ein höherer Lichtstrom in diesem Lichtpfad gemessen wird als ohne Beschädigung oder sogar überhaupt ein Lichtstrom gemessen wird. Ein diesen Lichtstrom detektierender Lichtsensor mag ein Lichtsensor sein, welcher eine Stärke des Lichtstroms feststellen kann. Dieser Lichtsensor ist vorteilhaft einsetzbar für den Fall, dass der Lichtstrom mit einem Lichtstrom eines unbeschädigten Leuchtstoffvolumens als Referenz zu vergleichen ist. Dieser Lichtsensor mag im normalen Betrieb auch dazu verwendet werden, um einen Lichtstrom des Primärlichts zu regeln. Ein diesen Lichtstrom detektierender Lichtsensor mag alternativ ein Lichtsensor sein, welcher nur das Vorhandensein des Lichtstroms feststellen kann, ohne dessen Stärke festzustellen oder ohne dessen Stärke mit ausreichender Genauigkeit festzustellen zu können. Ein solcher Lichtsensor mag z.B. für den Fall ausreichen, dass ein beschädigtes Leuchtstoffvolumen bei Bestrahlung durch die Zusatzlichtquelle(n) überhaupt erst Licht in den Lichtpfad einkoppelt.

Es ist eine Ausgestaltung, dass die mindestens eine Zusatzlichtquelle nur Primärlicht auf das Leuchtstoffvolumen einstrahlt, insbesondere falls ein Verhältnis des Primärlichts zu dem dabei erzeugten Sekundärlicht zumindest ungefähr einem Verhältnis des Nutzlichts im normalen Betrieb entspricht. Dies vereinfacht einen Aufbau und eine Auswertung. So mag eine Zusatzlichtquelle einer Primärlichtquelle entsprechen, z.B. ein blaues Licht emittierender Laser sein. Jedoch mag die Zusatzlichtquelle auch (Prüf-)Licht einer anderen spektralen Verteilung aussenden als die mindestens eine Primärlichtquelle, beispielsweise wenn die spektrale Verteilung der Zusatzlichtquelle für eine Schadensbestimmung geeigneter ist.

Es ist eine Weiterbildung, dass die mindestens eine Zusatzlichtquelle Licht mit einem Anteil an Primärlicht und einem Anteil an mindestens einem Sekundärlicht auf das Leuchtstoffvolumen einstrahlt. Dadurch kann das Test- oder Prüflicht besonders genau an die Zusammensetzung des von dem Leuchtstoffvolumen abgestrahlten Nutzlichts angepasst werden, z.B. auch dann, wenn eine Intensität des von der mindestens einen Zusatzlichtquelle abgestrahlten Lichts nicht der Intensität des Nutzlichts bei normalem Betrieb entspricht. Dies wiederum erleichtert eine Vergleichbarkeit mit einem unbeschädigten Leuchtstoffvolumen. Dies wiederum unterstützt eine Verwendung gleicher oder analoger Auswerteprozesse für eine Schadensbestimmung in einem Testbetrieb (bei aktivierter/n Zusatzlichtquelle(n) und deaktivierter/n Primärlichtquelle(n)) und in einem normalen Betrieb (bei deaktivierter/n Zusatzlichtquelle(n) und aktivierter/n Primärlichtquelle(n)) .

Es ist zudem eine Ausgestaltung, dass die Auswerteeinrichtung dazu eingerichtet ist, ein Vorliegen des Schadensfalls des Leuchtstoffvolumens anhand mindestens eines Verhältnisses von Sensordaten zu bestimmen, die mindestens einem Paar von unterschiedlichen Lichtanteilen gehören. Dieses Verhältnis ist besonders geeignet, Risse und Löcher festzustellen. Diese Ausgestaltung kann einen Vergleich des Verhältnisses mit einem Referenzwert oder Schwellwert umfassen, wobei ein Schadensfall beispielsweise durch Erreichen, Überschreiten oder Unterschreiten des Schwellwerts festgestellt wird. Das Verhältnis kann für mehrere Paare von unterschiedlichen Lichtanteilen ausgewertet werden, die z.B. von Paaren zueinander räumlich verteilt angeordneter Lichtsensoren mit unterschiedlichen spektralen Empfindlichkeiten aufgenommen oder detektiert werden.

Beispielsweise kann ein Verhältnis des Primärlichts und eines Sekundärlichts ausgewertet oder bestimmt werden. Werden nur das Primärlicht (z.B. blaues Licht) und ein Sekundärlicht (z.B. gelbes Licht) erzeugt, kann das Verhältnis der Intensität des Primärlicht zu der Intensität des Sekundärlichts (oder umgekehrt) verwendet werden, also z.B. des blauen Lichts zu dem gelben Licht. Werden das Primärlicht (z.B. blaues Licht), ein erstes Sekundärlicht (z.B. gelbes Licht) und ein zweites Sekundärlicht (z.B. rotes Licht) erzeugt, mögen grundsätzlich Intensitätsverhältnisse beliebiger Paare davon bestimmt bzw. ausgewertet werden, z.B. des blauen Lichts zu dem gelben Licht, des blauen Lichts zu dem roten Licht und/oder des gelben Lichts zu dem roten Licht.

Es ist noch eine Ausgestaltung, dass die Beleuchtungsvorrichtung ein Modul einer Fahrzeugbeleuchtung ist. Mindestens eine Zusatzlichtquelle mag dann an dem Modul befestigt sein. Es ist noch eine Ausgestaltung, dass die Beleuchtungsvorrichtung ein Scheinwerfer ist, z.B. einer Fahrzeugbeleuchtung. Mindestens eine Zusatzlichtquelle mag dann an einem Reflektor des Scheinwerfers angeordnet sein, beispielsweise an einer der reflektierenden (Innen-)Seite abgewandten (Außen-)Seite. Die außenseitig angeordnete Zusatzlichtquelle mag dann durch ein Loch in dem Reflektor auf das Leuchtstoffvolumen gerichtet sein. Es ist noch eine Ausgestaltung, dass mindestens eine Zusatzlichtquelle auf eine reflektierende (Innen-)Seite des Reflektors des Scheinwerfers gerichtet ist. Sie mag insbesondere außerhalb des Reflektors angeordnet sein.

Die Aufgabe wird auch gelöst durch ein Verfahren zum Bestimmen eines Schadensfalls eines Leuchtstoffvolumens einer Beleuchtungsvorrichtung, wobei die Beleuchtungsvorrichtung aufweist: mindestens eine Primärlichtquelle zum Erzeugen von Primärlicht, mindestens einen Lichtsensor zum Detektieren von mittels der mindestens einen Primärlichtquelle erzeugten Lichts und mindestens eine Zusatzlichtquelle zum Bestrahlen des Leuchtstoffvolumens, und wobei das Verfahren mindestens die folgenden Schritte aufweist: Bestrahlen einer Nutzlichtseite des Leuchtstoffvolumens nur mittels der Zusatzlichtquelle und Bestimmen eines Schadensfalls des Leuchtstoffvolumens auf der Grundlage von Sensordaten mindestens eines Lichtsensors. Das Verfahren kann analog zu der Beleuchtungsvorrichtung ausgestaltet werden und ergibt die gleichen Vorteile.

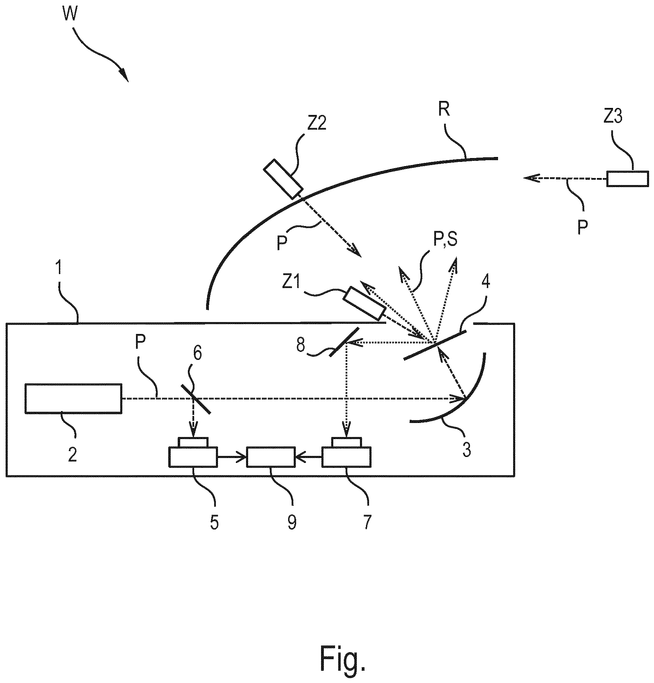

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit der Zeichnung näher erläutert wird. Dabei können zur Übersichtlichkeit gleiche oder gleichwirkende Elemente mit gleichen Bezugszeichen versehen sein.

Die **Figur** zeigt als Schnittdarstellung in Seitenansicht eine Beleuchtungsvorrichtung in Form eines Fahrzeugscheinwerfers W. Der Fahrzeugscheinwerfer W weist zur Erzeugung von Nutzlicht ein Lichterzeugungsmodul 1 auf. Das Lichterzeugungsmodul 1 weist mindestens eine Primärlichtquelle in Form mindestens eines Lasers 2 zum Erzeugen von hier z.B. blauem Primärlicht P auf.

In dem Pfad des von dem mindestens einen Laser 2 abgestrahlten Primärlichts P befindet sich beabstandet ein Reflektor in Form eines Umlenkspiegels 3, welcher das Primärlicht P auf ein Leuchtstoffvolumen in Form eines Leuchtstoffplättchens 4 strahlt. Das Leuchtstoffplättchen 4 wandelt das Primärlicht P teilweise in Licht einer größeren Wellenlänge um, nämlich hier in ein gelbes Sekundärlicht S. An der dem Umlenkspiegel 3 abgewandten Nutzlichtseite wird blau-gelbes bzw. weißes Mischlicht P, S erzeugt, das als das Nutzlicht aus dem Lichterzeugungsmodul 1 ausstrahlbar ist. Dieses Mischlicht P, S wird weiter auf eine Sekundäroptik des Fahrzeugscheinwerfers W gestrahlt, hier dargestellt durch einen Reflektor R, welcher das Mischlicht P, S in ein Fernfeld abbildet. So kann mittels des Fahrzeugscheinwerfers W z.B. ein Abblendlicht, ein Fernlicht, ein Nebellicht, ein Kurvenlicht ö. ä. erzeugt werden.

In dem Lichterzeugungsmodul 1 befindet sich ein erster Lichtsensor 5 zum Detektieren von Licht in dem Lichtpfad zwischen dem mindestens einen Laser 2 und dem Umlenkspiegel 3. Zum Abzapfen oder Auskoppeln von Licht aus diesem Lichtpfad ist ein Strahlteiler 6, z.B. ein teildurchlässiger Spiegel, vorgesehen, welcher einen vergleichsweise geringen Anteil des in dem Lichtpfad laufenden Lichts zu dem ersten Lichtsensor 5 abzweigt. Der erste Lichtsensor 5 mag für sichtbares Licht (einschließlich des Primärlichts P und des Sekundärlichts S) oder nur für das Primärlicht P (aber nicht das Sekundärlicht S) empfindlich sein.

Zusätzlich oder alternativ mag mindestens ein zweiter Lichtsensor 7 vorhanden sein, welcher das von dem Leuchtstoffplättchen 4 erzeugte Mischlicht P, S detektiert. Dazu ist hier ein Reflektor 8 vorgesehen, welches das Mischlicht P, S zu dem mindestens einen zweiten Lichtsensor 7 leitet. Der mindestens eine zweite Lichtsensor 7 mag das Licht in einer Variante auch direkt (also ohne einen Reflektor) detektieren oder abfühlen können. In noch einer Variante sind z.B. mehrere Paare aus für Primärlicht P bzw. für Sekundärlicht S empfindlichen Lichtsensoren 5, 7 in Umfangsrichtung um das Leuchtstoffplättchen 4 herum angeordnet.

Die Sensordaten des ersten Lichtsensors 5 und/oder des zweiten Lichtsensors 7 können mittels einer Auswerteeinrichtung 9 ausgewertet werden. Die Auswerteeinrichtung 9 ist insbesondere zum Bestimmen eines Schadensfalls des Leuchtstoffplättchens 4 auf der Grundlage der Sensordaten eingerichtet.

Zum Bestimmen eines Schadensfalls des Leuchtstoffplättchens 4 in einer Testphase außerhalb des normalen Betriebs, also bei ausgeschaltetem Laser 2, weist der Fahrzeugscheinwerfer W mindestens eine Zusatzlichtquelle Z1, Z2, Z3 zum Bestrahlen der Nutzlichtseite des Leuchtstoffplättchens 4 auf, insbesondere mit Primärlicht P. In der Testphase wird die mindestens eine Zusatzlichtquelle Z1, Z2, Z3, mindestens ein Lichtsensor 5, 7 und die Auswerteeinrichtung 9 betrieben. Eine erste Zusatzlichtquelle Z1 ist an dem Lichterzeugungsmodul 1 angebracht, eine zweite Zusatzlichtquelle Z2 an einer Außenseite des Reflektors R und/oder eine dritte Zusatzlichtquelle Z3 außerhalb es Reflektors R in seinem Lichtpfad. Die zweite Zusatzlichtquelle Z2 mag z.B. durch ein Loch (o. Abb.) in dem Reflektor R strahlen. Um Kosten und Komplexität gering zu halten mag nur eine dieser Zusatzlichtquellen Z1, Z2, Z3 vorhanden sein.

Mit Einstrahlen des Primärlichts P auf das Leuchtstoffplättchen 4 mittels der mindestens einen Zusatzlichtquelle Z1, Z2, Z3 wird dort wiederum Mischlicht P, S erzeugt, das von dem mindestens einen zweiten Lichtsensor 7 detektierbar ist. Da das Primärlicht P auf die Nutzlichtseite des Leuchtstoffplättchens 4 gestrahlt wird, tritt es nicht oder (z.B. durch Streuung) nur in geringem Maß aus dem Fahrzeugscheinwerfer W aus. Ein ggf. aufgrund von Löchern und/oder Rissen durch das Leuchtstoffplättchen 4 hindurchtretender intensiverer Primärlichtanteil wird vielmehr in das Lichterzeugungsmodul 1 eingestrahlt.

Die Auswerteeinrichtung 9 kann beispielsweise dazu eingerichtet sein, ein Vorliegen eines mechanischen Schadens des Leuchtstoffplättchens 4 (z.B. durch Löcher und/oder Risse) anhand mindestens eines Verhältnisses von Primärlicht P zu Sekundärlicht S zu bestimmen, welche in einen zumindest annähernd gleichen Raumwinkelbereich gestrahlt worden sind. Dies kann z.B. durch eine Auswertung der Sensordaten mindestens eines Paars von für Primärlicht P bzw. für Sekundärlicht S empfindlichen Lichtsensoren 5, 7 geschehen. Dabei kann bei mehreren solchen Paaren auch eine Korrelation verschiedener Verhältnisse mehrerer Paare verwendet werden. Der Schadensfall mag beispielsweise durch einen Vergleich mit einem Verhältnis eines nicht beschädigten Leuchtstoffplättchens 4 als Referenz bestimmt werden.

Der Schadenfall kann zusätzlich oder alternativ dadurch bestimmt werden, dass der erste Lichtsensor 5 ein Lichtsignal aus dem Lichtpfad zwischen der mindestens einen Primärlichtquelle und dem Umlenkspiegel 3 detektiert. Dieses Lichtsignal mag z.B. aufgrund von Primärlicht P erzeugt werden, das wegen eines Lochs ö. ä. durch das Leuchtstoffplättchen 4 dringt und von dem Umlenkspiegel 3 in diesen Lichtpfad eingekoppelt wird. Ggf. mag auch Sekundärlicht S eingekoppelt werden. Der Schadensfall mag beispielsweise dann als vorliegend angenommen werden, wenn der erste Lichtsensor 5 ein Lichtsignal empfängt, welches signifikant stärker ist als ein Referenzwert bei nicht beschädigtem Leuchtstoffplättchen 4.

Obwohl die Erfindung im Detail durch das gezeigte Ausführungsbeispiel näher illustriert und beschrieben wurde, so ist die Erfindung nicht darauf eingeschränkt und andere Variationen können vom Fachmann hieraus abgeleitet werden, ohne den Schutzumfang der Erfindung zu verlassen.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichen

- 1: Lichterzeugungsmodul
- 2: Laser
- 3: Umlenkspiegel
- 4: Leuchtstoffplättchen
- 5: Erster Lichtsensor
- 6: Strahlteiler
- 7: Zweiter Lichtsensor
- 8: Reflektor
- 9: Auswerteeinrichtung
- P: Primärlicht
- R: Reflektor
- S: Sekundärlicht
- W: Fahrzeugscheinwerfer
- Z1: erste Zusatzlichtquelle
- Z2: zweite Zusatzlichtquelle
- Z3: dritte Zusatzlichtquelle

## Patentansprüche

1. Beleuchtungsvorrichtung (1, W), aufweisend
- mindestens eine Primärlichtquelle (2) zum Erzeugen von Primärlicht (P),
- ein von der mindestens einen Primärlichtquelle (2) beabstandetes Leuchtstoffvolumen (4) zum zumindest teilweisen Umwandeln des Primärlichts (P) in Sekundärlicht (S) unterschiedlicher Wellenlänge,
- mindestens einen Lichtsensor (5, 7) zum Detektieren von mittels der mindestens einen Primärlichtquelle (P) erzeugten Lichts (P, S) und
- eine Auswerteeinrichtung (9) zum Bestimmen eines Schadensfalls des Leuchtstoffvolumens (4) auf der Grundlage von Sensordaten mindestens eines Lichtsensors (5, 7),
wobei die Beleuchtungsvorrichtung (1, W)
- mindestens eine Zusatzlichtquelle (Z1, Z2, Z3) aufweist, die dazu eingerichtet ist, ihr Licht auf eine Nutzlichtseite des Leuchtstoffvolumens (4) zu strahlen, und
- dazu eingerichtet ist, die mindestens eine Zusatzlichtquelle (Z1, Z2, Z3), den mindestens einen Lichtsensor (5, 7) und die Auswerteeinrichtung (9) bei ausgeschalteter Primärlichtquelle (2) zu betreiben.

2. Beleuchtungsvorrichtung nach Anspruch 1, wobei mindestens ein Lichtsensor (7) dazu eingerichtet und angeordnet ist, von dem Leuchtstoffvolumen (4) abgestrahltes Licht (P, S) zu detektieren.

3. Beleuchtungsvorrichtung (1, W) nach Anspruch 2, wobei mehrere Lichtsensoren (7) in Umfangsrichtung um das Leuchtstoffvolumen (4) herum angeordnet sind.

4. Beleuchtungsvorrichtung (1, W) nach einem der vorhergehenden Ansprüche, wobei mindestens ein Lichtsensor (5) dazu eingerichtet und angeordnet ist, Licht (P) in einem Lichtpfad zwischen der mindestens einen Primärlichtquelle (2) und dem Leuchtstoffvolumen (4) zu detektieren.

5. Beleuchtungsvorrichtung nach einem der vorhergehenden Ansprüche, wobei die mindestens eine Zusatzlichtquelle (Z1, Z2, Z3) Primärlicht (P) auf das Leuchtstoffvolumen (4) einstrahlt.

6. Beleuchtungsvorrichtung nach einem der vorhergehenden Ansprüche, wobei die Auswerteeinrichtung (9) dazu eingerichtet ist, ein Vorliegen des Schadensfalls des Leuchtstoffvolumens (4) anhand mindestens eines Verhältnisses von Sensordaten zu bestimmen, die mindestens einem Paar von unterschiedlichen Lichtanteilen (P, S) gehören.

7. Beleuchtungsvorrichtung (1) nach einem der vorhergehenden Ansprüche, wobei die Beleuchtungsvorrichtung (1, W) ein Modul (1) einer Fahrzeugbeleuchtung (W) ist.

8. Beleuchtungsvorrichtung (W) nach einem der vorhergehenden Ansprüche, wobei die Beleuchtungsvorrichtung (1, W) ein Scheinwerfer (W) ist.

9. Verfahren zum Bestimmen eines Schadensfalls eines Leuchtstoffvolumens (4) einer Beleuchtungsvorrichtung (1, W), wobei die Beleuchtungsvorrichtung (1, W) aufweist:
- mindestens eine Primärlichtquelle (2) zum Erzeugen von Primärlicht (P),
- mindestens einen Lichtsensor zum Detektieren von mittels der mindestens einen Primärlichtquelle erzeugten Lichts und
- mindestens eine Zusatzlichtquelle zum Bestrahlen des Leuchtstoffvolumens,
und wobei das Verfahren mindestens die folgenden Schritte aufweist:
- Bestrahlen einer Nutzlichtseite des Leuchtstoffvolumens (4) nur mittels der Zusatzlichtquelle (Z1, Z2, Z3) und
- Bestimmen eines Schadensfalls des Leuchtstoffvolumens (4) auf der Grundlage von Sensordaten mindestens eines Lichtsensors (5, 7).

## Claims

1. Lighting device (1, W), comprising
- at least one primary light source (2) for generating primary light(P),
- a phosphor volume (4) spaced apart from the at least one primary light source (2) and serving for at least partly converting the primary light (P) into secondary light (S) having a different wavelength,
- at least one light sensor (5, 7) for detecting light (P, S) generated by means of the at least one primary light source (P), and
- an evaluation unit (9) for determining a case of damage of the phosphor volume (4) on the basis of sensor data of at least one light sensor (5, 7),
wherein the lighting device (1, W)
- comprises at least one additional light source (Z1, Z2, Z3) configured to radiate its light onto a useful light side of the phosphor volume (4) and
- is configured to operate the at least one additional light source (Z1, Z2, Z3), the at least one light sensor (5, 7) and the evaluation unit (9) with the primary light source (2) switched off.

2. Lighting device according to Claim 1, wherein at least one light sensor (7) is configured and arranged to detect light (P, S) emitted by the phosphor volume (4).

3. Lighting device (1, W) according to Claim 2, wherein a plurality of light sensors (7) are arranged in the circumferential direction around the phosphor volume (4).

4. Lighting device (1, W) according to any of the preceding claims, wherein at least one light sensor (5) is configured and arranged to detect light (P) in a light path between the at least one primary light source (2) and the phosphor volume (4).

5. Lighting device according to any of the preceding claims, wherein the at least one additional light source (Z1, Z2, Z3) radiates primary light (P) onto the phosphor volume (4).

6. Lighting device according to any of the preceding claims, wherein the evaluation unit (9) is configured to determine a presence of the case of damage of the phosphor volume (4) on the basis of at least one ratio of sensor data associated with at least one pair of different light portions (P, S).

7. Lighting device (1) according to any of the preceding claims, wherein the lighting device (1, W) is a module (1) of a vehicle lighting system (W).

8. Lighting device (W) according to any of the preceding claims, wherein the lighting device (1, W) is a headlight (W).

9. Method for determining a case of damage of a phosphor volume (4) of a lighting device (1, W), wherein the lighting device (1, W) comprises:
- at least one primary light source (2) for generating primary light (P),
- at least one light sensor for detecting light generated by means of the at least one primary light source and
- at least one additional light source for irradiating the phosphor volume,
and wherein the method comprises at least the following steps:
- irradiating a useful light side of the phosphor volume (4) only by means of the additional light source (Z1, Z2, Z3), and
- determining a case of damage of the phosphor volume (4) on the basis of sensor data of at least one light sensor (5, 7).

## Revendications

1. Dispositif d'éclairage (1, W), comportant
- au moins une source de lumière primaire (2) pour générer de la lumière primaire (P),
- un volume de matière luminescente (4) espacé de l'au moins une source de lumière primaire (2) pour convertir au moins partiellement la lumière primaire (P) en lumière secondaire (S) de longueur d'onde différente, au moins un capteur de lumière (5, 7) pour détecter la lumière (P, S) générée par l'au moins une source de lumière primaire (P) et un dispositif d'évaluation (9) pour déterminer un événement dommageable du volume de matière luminescente (4) sur la base de données de capteur d'au moins un capteur de lumière (5, 7),
dans lequel le dispositif d'éclairage (1, W)
- comprend au moins une source de lumière d'appoint (Z1, Z2, Z3) conçue pour projeter de la lumière sur un côté lumineux utile du volume de matière luminescente (4) et
- est conçu pour faire fonctionner l'au moins une source de lumière d'appoint (Z1, Z2, Z3), l'au moins un capteur de lumière (5, 7) et le dispositif d'évaluation (9) lorsque la source de lumière primaire (2) est éteinte.

2. Dispositif d'éclairage selon la revendication 1, dans lequel au moins un capteur de lumière (7) est conçu et agencé pour détecter la lumière (P, S) reflétée par le volume de matière luminescente (4).

3. Dispositif d'éclairage (1, W) selon la revendication 2, dans lequel une pluralité de capteurs de lumière (7) sont disposés dans le sens périphérique autour du volume de matière luminescente (4).

4. Dispositif d'd'éclairage (1, W) selon l'une des revendications précédentes, dans lequel au moins un capteur de lumière (5) est conçu et agencé pour détecter de la lumière (P) dans un trajet lumineux entre l'au moins une source de lumière primaire (2) et le volume de matière luminescente (4).

5. Dispositif d'éclairage selon l'une des revendications précédentes, dans lequel l'au moins une source lumineuse d'appoint (Z1, Z2, Z3) projette de la lumière primaire (P) sur le volume de matière luminescente (4).

6. Dispositif d'éclairage selon l'une des revendications précédentes, dans lequel le dispositif d'évaluation (9) est configuré pour déterminer la présence de l'événement dommageable du volume de matière luminescente (4) grâce à au moins un rapport de données de capteur appartenant à au moins une paire de composants lumineux différents (P, S).

7. Dispositif d'éclairage (1) selon l'une des revendications précédentes, dans lequel le dispositif d'éclairage (1, W) est un module (1) d'éclairage (W) d'un véhicule.

8. Dispositif d'éclairage (W) selon l'une des revendications précédentes, dans lequel le dispositif d'éclairage (1, W) est un phare (W).

9. Procédé de détermination d'un événement dommageable d'un volume de matière luminescente (4) d'un dispositif d'éclairage (1, W), dans lequel le dispositif d'éclairage (1, W) comporte :
- au moins une source de lumière primaire (2) pour générer de la lumière primaire (P),
- au moins un capteur de lumière pour détecter la lumière générée par l'au moins une source de lumière primaire et
- au moins une source de lumière d'appoint pour projeter de la lumière sur le volume de matière luminescente,
le procédé comportant au moins les étapes suivantes :
- projection de lumière sur un côté lumineux utile du volume de matière luminescente (4) uniquement au moyen de la source de lumière d'appoint (Z1, Z2, Z3) et
- détermination d'un événement dommageable du volume de matière luminescente (4) sur la base de données de capteur d'au moins un capteur de lumière (5, 7).
